# EUROPÄISCHE PATENTSCHRIFT

(11) **EP 3 271 047 B1**
(45) Veröffentlichungstag und Bekanntmachung des Hinweises auf die Patenterteilung: **12.01.2022**
(21) Anmeldenummer: 16710160.9
(22) Anmeldetag: 16.03.2016
(51) Int. Cl.: B01D 53/22, B01D 53/26, B01D 53/30, B01D 63/02

(54) **DRUCKTAUPUNKTGESTEUERTE SPÜLLUFTREGELEINHEIT**
PRESSURE DEW POINT-CONTROLLED PURGE AIR REGULATING UNIT
UNITÉ DE RÉGULATION D'AIR DE BALAYAGE COMMANDÉE AU POINT DE ROSÉE SOUS PRESSION

(30) Priorität: 19.03.2015 DE 102015104154
(43) Veröffentlichungstag der Anmeldung: 24.01.2018
(73) Patentinhaber: Beko Technologies GmbH, 41468 Neuss (DE)
(72) Erfinder: SLATMAN, Johannes Franciscus, 5702 SL Helmond (NL); PRIOR, Thomas, 51519 Odenthal (DE); SINSTEDTEN, Johannes, 41352 Korschenbroich (DE); SCHLENSKER, Herbert, 51381 Leverkusen (DE)
(74) Vertreter: Patentanwälte Bauer Vorberg Kayser
(86) Internationale Anmeldenummer: PCT/EP2016/055631
(87) Internationale Veröffentlichungsnummer: WO 2016/146653

(56) Entgegenhaltungen:
- EP-A2- 0 903 173
- EP-B1- 0 903 173
- WO-A1-2009/026005
- JP-A- 2008 284 409
- US-A1- 2004 194 483

## Beschreibung

Die Erfindung bezieht sich auf eine Spülluftregeleinheit für eine Trocknungsvorrichtung für Druckgas, insbesondere Druckluft, die mit einem Gehäuse verbindbar ist, in dem ein Membranfilter, vorzugsweise ein Bündel Hohlfasermembranen, angeordnet ist.

Beim Einsatz von Druckluft, beispielsweise in der Industrietechnik oder der Medizintechnik, ist Feuchtigkeit im Leitungsnetz und an den Verbrauchsstellen ein Qualitätsproblem. Eine wichtige Aufgabe ist daher immer die Trocknung der Druckluft. Hierzu werden Membranfilter eingesetzt, die selektiv durchlässig sind für Wasserdampf. In dem Filtergehäuse ist ein Bündel hochselektiver Hohlfasermembranen angeordnet (Membranfasern), durch die feuchte Druckluft strömt. Die feuchte Druckluft ist vorzugsweise gefiltert, damit noch in ihr enthaltene Schmutzpartikel, Ölnebel und Kondensat zurückgehalten werden, also die Hohlfasermembranen nicht verstopfen. Durch die Hohlfasermembranen diffundiert Wasserdampf nach aussen. Am Auslass für getrocknete Druckluft wird ein geringer Teilstrom der Druckluft abgezweigt und nach Expansion als Spülluft benutzt. Die Spülluft wird im Gegenstrom zur Druckluft über die Aussenseite der Hohlfasern geführt. Aufgrund des Unterschiedes in der Wasserdampfkonzentration wird eine ständige Wanderung der Wassermoleküle aus der Druckluft in die Spülluft erreicht. Somit ist der üblicherweise gebräuchliche Begriff Membranfilter zumindest missverständlich, da ein Membranfilter nicht mechanisch, sondern durch Diffusion trennt. Der Einfachheit halber wird dieser Begriff dennoch im Rahmen der Erfindung verwendet.

Dieser Vorgang läuft kontinuierlich ab. Die Spülluft trocknet ständig die eintretende, feuchte Druckluft. Nur Wassermoleküle können die Membranen der Hohlfasern durchdringen. Die Zusammensetzung der getrockneten Druckluft bleibt unverändert. Als Ergebnis hat man reine, trockene Druckluft.

Das Volumen des Spülluftstroms wird durch eine Düse definiert, die einen durch den Druck und die Düsengröße bestimmten, konstanten Vollumenstrom passieren lässt. Nachteilig ist, dass bei Teillast oder Nulllast, also dann, wenn wenig oder keine Druckluft angefordert wird, der Spülluftstrom konstant bleibt, obwohl er nur zum Teil oder gar nicht benötigt wird. Dies führt zu erheblichen Druckverlusten im Gesamtsystem.

Um dieses Problem zu verringern, sind Spülluftregler bekannt, deren Aufgabe darin besteht, den Spülluftstrom an die erforderliche Menge anzupassen.

Aus der US-Patentschrift 5,160,514 ist eine Trocknungsvorrichtung für Druckluft mit einem solchen Spülluftregler bekannt, der in eine Trockenvorrichtung für Druckluft integriert ist. Hierzu ist der Druckluftausgang der Trockenvorrichtung mit einer Kammer in Verbindung, die durch eine Membran begrenzt ist. Auf der anderen Seite der Membran befindet sich eine weitere Kammer, die über eine Leitung mit dem Drucklufteingang der Trockenvorrichtung verbunden ist. Die Membran nimmt eine Stellung abhängig von der Druckdifferenz zwischen Drucklufteingang und Druckluftausgang ein. Die Membran ist mit einem Ventilelement verbunden, das einen seitlichen Schlitz hat und in einer zugehörigen Innenbohrung des Gehäuses geführt ist. Je nach Stellung der Membran nimmt das Ventilelement eine Position ein, die ein mehr oder weniger starkes Strömen von Druckluft des Druckluftausgangs der Trockenvorrichtung hin zum Eingang der Spülleitung ermöglicht.

Dieser Spülluft-Regler arbeitet nicht zufriedenstellend. Insbesondere bei kleinen Druckdifferenzen zwischen dem Eingangsdruck und dem Ausgangsdruck für Druckluft der Trockenvorrichtung ist das Regelverhalten ungenügend. Ein Nachteil bei dieser Lösung ist auch, dass die Regelung auf einen konkreten (durchschnittlichen) Betriebsdruck justiert werden muss. Bei Abweichungen im Betriebsdruck verändert sich das Regelverhalten deutlich. Dies führt zu nicht eindeutigen Verhältnissen.

Hinzu kommt, dass der Differenzdruck auch von der Beladung des Filterelements abhängig ist, der Füllgrad hat Einfluss auf den Differenzdruck und damit auch auf die Regelung der Spülluft. Diese kann sich während der Nutzungsdauer des Filterelements ändern, was unerwünscht ist.

Des Weiteren betrifft die WO 2009/026005 A1 ein Energiemanagementsystem für eine Membranvorrichtung. In der EP 0 903 173 A2 ist ein Membrantrockner für feuchte Luft gezeigt. Die Zufuhr der Spülluft basiert dabei auf der Entnahme von getrockneter Nutzdruckluft. Dabei wird ein Spülluftventil angesteuert, wenn Nutzdruckluft von einem Verbraucher entnommen wird.

Aus der JP 2008 284409 A ist eine Trocknungsvorrichtung mit einem Membranfilter aus Hohlfasermembranen bekannt, wobei ein Teil der entfeuchteten Luft als Spülluft verwendet und über ein Steuerventil der Hohlfasermembran erneut zugeführt wird. Es werden zwei unterschiedliche Sensoren, nämlich ein Temperatursensor und ein Feuchtigkeitssensor, zur Kontrolle der getrockneten Luft, sowie ein Heizgerät zur Erwärmung der rückgeführten Spülluft zwecks Steigerung der Effektivität der Trocknung eingesetzt.

Die US 2004/0194483 A1 betrifft eine Spülluftregeleinheit für eine Trocknungsvorrichtung für Druckluft, wobei die Spülluftregeleinheit eine Regeleinheit mit einem Feuchtigkeitssensor zur Erfassung der Feuchtigkeit der getrockneten Druckluft aufweist.

Hiervon ausgehend hat sich die Erfindung die Aufgabe gestellt, eine Spülluftregeleinheit für eine Trocknungsvorrichtung für Druckluft zu schaffen, die eine verbesserte Regelung oder Schaltung der Spülluft ermöglicht. Es soll eine möglichst empfindliche und schnelle Reaktion möglich sein. Die Spülluftregeleinheit soll dabei aber trotzdem verhältnismäßig einfach aufgebaut und kostengünstig herstellbar sein. Eine weitere Aufgabe der Erfindung besteht in der Bereitstellung eines entsprechenden Verfahrens zur Regelung der Strömung von aus einem Membrantrockner ausströmender getrockneter Druckluft in ein Gehäuse des Membrantrockners.

Erfindungsgemäß wird die Aufgabe durch eine Spülluftregeleinheit mit den Merkmalen des Patentanspruchs 1 sowie mit den Verfahrensschritten des unabhängigen Verfahrensanspruchs gelöst.

Die Erfindung basiert auf der Nutzung einer Eigenart von Membrantrocknern mit geregelter oder ungeregelter Spülluft, nämlich dass die Absenkung des Drucktaupunktes einen nahezu gleichbleibenden, konstanten Wert aufweist. Bei sich ändernden Drucktaupunkten im Eintritt eines Membrantrockners ändert sich demnach auch der Drucktaupunkt am Austritt. Dies ist bei vielen Anwendungen auch so gewünscht. Bei anderen jedoch ist es wichtig, einen bestimmten Drucktaupunkt im Austritt zu erzielen, unabhängig vom Drucktaupunkt im Eintritt. Dies ist beispielsweise aufgrund normativer Vorgaben oftmals im medizinischen Bereich, beispielsweise bei der Erzeugung von Atemluft, der Fall. Über den Drucktaupunkt der getrockneten Druckluft am Austritt kann unmittelbar abgeleitet werden, ob die zurück in das Gehäuse geleitete Spülluft ausreicht bzw. ob die Trocknungsleistung des Membrantrockners zufriedenstellend ist.

Somit basiert die Erfindung auf der Erkenntnis, dass eine optimale Regelung des Spülluftstroms durch eine Erfassung des Drucktaupunktes der getrockneten Druckluft erreichbar ist. Abhängig vom ermittelten Drucktaupunkt kann erfindungsgemäß eine Regelung des Spülluftstromes auf die erforderliche Menge für einen gewünschten, wählbaren Drucktaupunkt oder Drucktaupunktbereich erfolgen. Neben einer elektronischen Regeleinheit mit einem Taupunktsensor und einem Temperatursensor ist hierfür weiterhin ein Stellventil im Spülluftkanal vorgesehen.

Mithilfe der ermittelten Werte des Taupunktsensors, der letztendlich den Feuchtegrad der getrockneten Druckluft bestimmt, und des Temperatursensors kann der Drucktaupunkt der getrockneten Druckluft errechnet werden. Die die ermittelten Werte werden an die elektronische Regeleinheit weitergeleitet, in der die Berechnung vorgenommen wird.

Es ist möglich, zwei getrennte Sensoren, also einen Taupunktsensor und einen Temperatursensor, zu verwenden, vorzugsweise kommt aber ein einziges Sensorelement zum Einsatz, das beide Werte ermitteln kann.

Bei handelsüblichen Membrantrocknern wird feuchte Druckluft an einem Einlass in den Membrantrockner geleitet und verlässt diesen als getrocknete Druckluft bzw. Nutzluft über einen Auslasskanal wieder. Kurz vor dem Austritt wird ein Teilstrom der getrockneten Druckluft über einen Spülluftkanal als Spülluft entnommen und expandiert. Er wird an die Außenseite der Membranfasern geleitet, nimmt den Wasserdampf auf und verlässt den Membrantrockner am Auslass. Erfindungsgemäß ist nun die Spülluftregeleinheit auf den Membrantrockner aufgesetzt und weist zwei Anschlüsse auf. Ein Anschluss ist mit dem Auslasskanal und der andere Anschluss mit dem Spülluftkanal des Membrantrockners verbunden und leitet die getrocknete Druckluft als Spülluft zurück zu den Membranfasern. Die Spülluft strömt vor dem Zurückströmen zu den Membranfasern durch einen Spülluftkanal in der Spülluftregeleinheit. Statt der Verbindung mit dem Auslasskanal kann die Spülluftregeleinheit auch mit dem Spülluftkanal des Membrantrockners verbunden sein. Wesentlich ist nur, dass getrocknete Druckluft abgezweigt und in die Spülluftregeleinheit geleitet wird, bevor sie zurück zu den Membranfasern gelangt.

Die Spülluftregeleinheit weist also im montierten Zustand einen Teilabschnitt des Spülluftkanals aus.

Neben den beiden Anschlüssen verfügt die Spülluftregeleinheit über eine Steuerplatine mit einem Rechenprozessor, elektrische Anschlüsse zur Energieeinspeisung, sowie zur üblichen Daten- und Signalübertragung an den Betreiber. Vorzugsweise, aber nicht notwendigerweise ermöglicht ein Display die Anzeige des Ist-Zustandes sowie die Einstellung gewünschter Zustände unmittelbar an der Spülluftregeleinheit. Die Eingabe kann dabei über das Display selbst (Touchscreen) oder eine zusätzliche Tastatur erfolgen. Erfindungsgemäß kann alternativ auch ein extern angeordnetes Eingabegerät und/oder mit Display verwendet werden. Die Datenübertragung zur Spülluftregeleinheit kann dabei kabellos oder kabelgebunden erfolgen.

Erfindungsgemäß ist in der Regeleinheit der gewünschte Drucktaupunkt als Sollwert gespeichert. Denkbar ist auch die Speicherung eines Wertebereichs, in den der Drucktaupunkt der getrockneten Druckluft fallen soll. Die Regeleinheit vergleicht den ermittelten bzw. errechneten Drucktaupunkt der getrockneten Druckluft mit dem Sollwert oder dem Sollwertbereich und regelt das Volumen des Spülluftstroms dann in Abhängigkeit des Ergebnisses.

Bei Überschreitung des Sollwertes wird das Stellventil betätigt und Spülluft zu den Membranfasern geleitet. Dies kann erfindungsgemäß in Zyklen erfolgen, also mit einer bestimmten Anzahl von Öffnungs- und Schließvorgängen. Ist der Sollwert erreicht, werden keine weiteren Zyklen mehr durchgeführt. Ist der Sollwert auch nach einer Zeitvorgabe nicht erreicht, wird das Stellventil dauerhaft geöffnet. Die Zyklen sind variabel definierbar, also mit unterschiedlichen Öffnungsund Schließzeiten. Ebenso variabel ist die Zeitvorgabe bis zur dauerhaften Ventilbetätigung. Mit diesem Verfahren ist es möglich, ein Stellventil in Form eines einfachen Magnetventils mit Ventilkolben zu verwenden. Diese Technik ist sehr einfach, kostengünstig, arbeitet zuverlässig und wartungsarm über lange Betriebszeiten.

Alternativ kann das Stellventil auch mit einem motorbetriebenen Ventil oder mit einem Proportionalventil oder anderen Varianten ausgeführt werden. Der Spülluftkanal kann auch nur teilweise, also nicht über seinen gesamten Querschnitt geöffnet oder geschlossen werden. Das Steuerventil kann den Spülluftkanal kontinuierlich öffnen oder schließen, je nach Volumenbedarf an Spülluftkanal.

In einer besonders vorteilhaften Ausführungsvariante besteht das Stellventil aus einem Ventilkolben und einem Steuerventil mit einem Steuerventilkolben und einer Magnetspule. Der Spülluftkanal verzweigt sich vor den beiden Ventilkolben, wobei ein erster Teilabschnitt am Ventilkolbensitz und ein zweiter Teilabschnitt am Steuerventilkolbensitz endet. Ein Verbindungskanal reicht vom Steuerventilkolbensitz zum Ventilkolbenraum, in dem sich der Ventilkolben bewegt. Der Verbindungskanal mündet an der dem Ventilkolben des abgewandten Seite des Ventilkolbens in den Ventilkolbenraum.

Verschließt der Steuerventilkolben den Steuerventilkolbensitz und somit den zweiten Teilabschnitt, reicht der Druck aus dem Gehäuse ausströmenden getrockneten Druckluft aus, um den Ventilkolben zu bewegen, wodurch dieser den Ventilkolbensitz und somit den Spülluftkanal freigibt und die Spülluft zu den Membranfasern strömen kann.

Wird bei dieser Ausführungsvariante das Steuerventil durch Bestromung der Magnetspule betätigt, bewegt sich der Steuerventilkolben und gibt den Steuerventilkolbensitz frei. Da am Steuerventil der Druck der getrockneten Druckluft bzw. Nutzluft aus dem ersten Teilabschnitt ansteht, baut sich dieser Druck nun im Raum hinter dem Ventilkolben auf. Dadurch bewegt sich dieser, vorzugsweise unterstützt durch ein Federelement, und verschließt den Ventilsitz. Somit fließt keine Spülluft mehr zu den Membranfaser.

In einer besonders vorteilhaften Ausführungsvariante ist ein Schleichluftkanal vorgesehen, durch den auch dann eine kleine Menge der getrockneten Druckluft als Schleichluft den Ventilkolben passiert, wenn dieser den Ventilsitz verschließt. Der Schleichluftkanal verbindet den Ventilraum mit dem Spülluftkanal, wobei er in Strömungsrichtung hinter dem Stellventil in den Spülluftkanal mündet.

Die dauernd fließende, kleine Menge Schleichluft sorgt dafür, dass der Taupunktsensor auch bei abgeschaltetem Spülluftstrom umströmt wird und den Taupunkt erfassen kann. Gleichzeitig bleibt der Raum um die Membranfasern stets sehr trocken, wodurch ein schnelles Anfahrverhalten gesichert ist.

Die beschriebene bevorzugte Ausführungsvariante hat den wesentlichen Vorteil, dass das Stellventil im unbestromten Zustand geöffnet ist und Spülluft zu den Membranfasern gelangen kann. Selbst beim Stromausfall kann der Membrantrockner betrieben werden.

Erfindungsgemäß ist eine getaktete Messung möglich. Dazu wird das Stellventil gelegentlich betätigt, auch wenn kein Bedarf an Spülluft besteht. Der kurzzeitig strömende Spülluftstrom dient dann anstelle der Schleichluft ausschließlich der Drucktaupunktmessung. Somit kann auf den Schleichluftkanal verzichtet werden, das Stellventil benötigt je nach Takten gegebenenfalls weniger Luft, da auf den permanenten Schleichluftstrom verzichtet werden kann.

Erfindungsgemäß ist auch eine Variante einsetzbar, die mit nur einem Kolben auskommt. Bei dieser Variante gibt der Steuerventilkolben unmittelbar den Spülluftkanal frei oder verschließt diesen. Durch einen solchen Aufbau lassen sich Kosten einsparen.

Die Regeleinheit verfügt über alle modernen Schnittstellen der Datenkommunikation oder kann damit ausgerüstet werden. Messwerte (Drucktaupunkt, Temperatur) können ebenso weitergeleitet werden wie Servicezustände, beispielsweise notwendiger Ersatz von Verschleißteilen, Betriebsstunden oder ähnliches. Auch kann Alarm ausgegeben werden, wenn der Sollwert nicht oder dauerhaft nicht erreicht wird.

Neben der genannten Temperatur-und Taupunkterfassung sind auch zusätzliche Datenerfassungen mit Sensoren, z.B. für Druck- oder Volumenstrommessung möglich.

Die erfindungsgemäße Spülluftregeleinheit ist in den Gehäusekopf des Membrantrockners integrierbar, wodurch der Aufbau sehr kompakt und kostengünstig ist. Alternativ ist aber auch die Anordnung an anderer Stelle des Gehäuses möglich.

Gegenüber der Standardausführung führt die Erfindung zu erheblichen Kosteneinsparungen durch Abschaltung, wenn keine Nutzluft benötigt wird und durch Anpassung auf den variierenden Nutzluftstrom. Hinzu kommt, dass der Drucktaupunkt als fester Wert definiert erzeugt werden kann. Je nach Anwendungsfall ist dies ausgesprochen vorteilhaft. Auch ist eine variable Einstellung, angepasst an Umgebungsbedingungen möglich.

Die Erfindung wird anhand der nachfolgenden Figuren näher erläutert. Diese sollen nicht einschränkend zu verstehen sein, sondern zeigen lediglich Prinzipdarstellungen der Erfindung. Es zeigen:
- Fig. 1:: das Grundprinzip der Spülluftregeleinheit in einer vereinfachten Prinzipdarstellung,
- Fig. 2:: eine bevorzugte Ausführungsvariante der Erfindung im Querschnitt, mit geöffnetem Spülluftkanal,
- Fig. 3:: die bevorzugte Ausführungsvariante aus Fig. 2 mit geschlossenem Spülluftkanal.

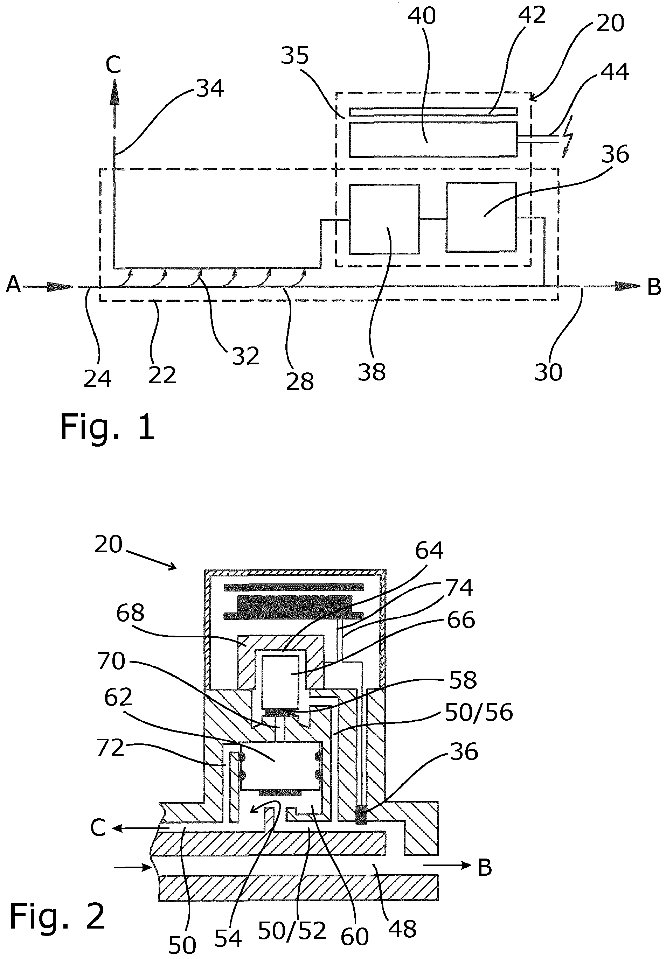

Aus Figur 1 wird die Funktion einer erfindungsgemäßen Spülluftregeleinheit 20 deutlich. Die Fluidströme sind zum Teil durch Pfeile gekennzeichnet, wobei feuchte Druckluft mit A, trockene Druckluft mit B, Spülluft mit C und Schleichluft mit D bezeichnet ist.

Die Pfeile verdeutlichen den Strömungsverlauf der Druckluft innerhalb des Membrantrockners 22. Die Druckluft wird durch einen Einlass 24 eines Gehäusekopfs 26 in den Membrantrockner 22 geleitet, gelangt durch ein Innenrohr in einen Austrittsraum und strömt von dort durch einen Gehäuseringraum durch Membranfasern 28 (Hohlfasermembrane) zurück zum Gehäusekopf und durch einen Auslass 30 als getrocknete Druckluft B bzw. Nutzluft wieder hinaus. Beim Durchströmen der Membranfasern 28 diffundiert die Feuchtigkeit der Druckluft als Wasserdampf 32 durch die Hohlfaserwandungen nach außen.

Ein Teilstrom der getrockneten Druckluft B wird relativ kurz vor dem Auslass 30 umgeleitet, expandiert und als Spülluft C in den Außenraum der Hohlfasern geleitet, nimmt dort den diffundierten Wasserdampf 32 auf und leitet diesen dann durch einen Spülluftausgang 34 in die Umgebung ab.

Erfindungsgemäß ist nun die Spülluftregeleinheit 20 auf den Membrantrockner 22 aufgesetzt und weist zwei Anschlüsse auf, die mit dem Spülluftkanal in Verbindung stehen, so dass die Spülluft C vor dem Zurückströmen zu den Membranfasern 28 durch die Spülluftregeleinheit 20 strömt.

Die Spülluftregeleinheit 20 weist einen Taupunktsensor 36 zur Erfassung des Taupunktes der getrockneten Druckluft B, einen nicht gezeigten Temperatursensor zur Erfassung der Temperatur der getrockneten Druckluft B und ein Stellventil 38 auf.

Weitere Bauteile der Spülluftregeleinheit 20 sind eine Steuerplatine 40, ein Display 42, Anschlüsse 44 für Signal- und Datentransfer sowie ein Gehäuse 46. Das Display 42 ist optional und kann insbesondere nicht nur als Anzeigemittel, sondern auch als Bedienungseinheit dienen.

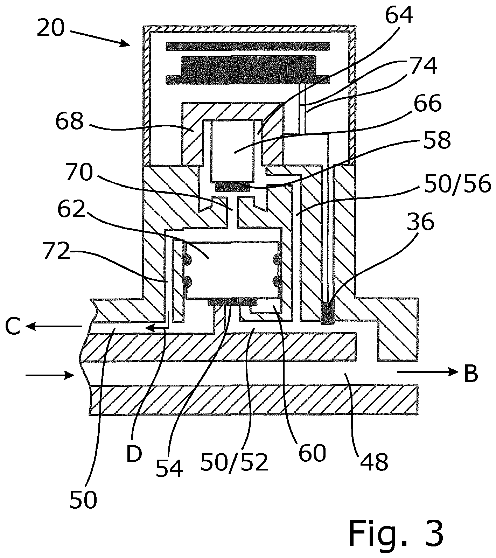

Die Figuren 2 und 3 zeigen eine erste erfindungsgemäße Ausführungsvariante der Spülluftregeleinheit 20 im Querschnitt. In Figur 2 ist die Situation bei geöffnetem Stellventil 38 gezeigt, Figur 3 verdeutlicht die Situation bei geschlossenem Stellventil 38.

Erkennbar ist, dass der Taupunktsensor 36 über elektrische Leitungen (Datenleitungen) 74 mit der Regeleinheit 35 und die Regeleinheit 35 wiederum über Datenleitungen 74 mit der Magnetspule 68 verbunden ist. Zwischen der dem Taupunktsensor 36 und der Regeleinheit 35 dienen die elektrischen Leitungen 74 in erster Linie der Signalübertragung, zwischen der Magnetspule 68 und der Regeleinheit 35 in erster Linie der Energieübertragung.

Erkennbar ist ein Auslasskanal 48, von dem ein Spülluftkanal 50 abzweigt. Der Spülluftkanal 50 verzweigt sich in einen ersten Teilabschnitt 52, der an einem Ventilkolbensitz 54 endet, und einem zweiten Teilabschnitt 56, der an einem Steuerventilkolbensitz 58 endet. Der Ventilkolbensitz 54 grenzt an einem Ventilkolbenraum 60, in dem sich ein Ventilkolben 62 und der Steuerventilkolbensitz 58 an einen Steuerventilkolbenraum 64, in dem sich ein Steuerventilkolben 66 befindet. Der Steuerventilkolben 66 ist von einer Magnetspule 68 umgeben und kann von dieser bewegt werden.

Der Steuerventilkolbenraum 64 ist über einen Verbindungskanal 70 mit dem Ventilkolbenraum 60 verbunden. Der Verbindungskanal 70 mündet in den Ventilkolbenraum 60 auf der dem Ventilkolbensitz 54 gegenüberliegenden Seite, so dass der Ventilkolben 62 zwischen dem Ventilkolbensitz 54 und dem Verbindungskanal 70 bzw. dessen Mündung angeordnet ist.

Weiterhin ist ein Schleichluftkanal 72 erkennbar, der den Ventilkolbenraum 60 mit dem Spülluftkanal 50 verbindet, wobei er in Strömungsrichtung hinter dem Stellventil 38 in diesen mündet.

Figur 2 verdeutlicht, dass der Druck der getrockneten Druckluft B unterhalb des Ventilkolbens 62 ansteht, wodurch diese angehoben wird. Daher kann Spülluft C durch den Ventilkolbensitz 54 entlang des Spülluftkanals 50 zu den Membranfasern 28 strömen. Der Steuerventilkolben 66 verschließt dabei den Steuerventilkolbensitz 58, so dass der zweite Teilabschnitt 56 verschlossen ist.

Figur 3 verdeutlicht den Zustand, in dem die Magnetspule 68 den Steuerventilkolben 66 angezogen hat. Der zweite Teilabschnitt 56 ist dadurch geöffnet, da der Steuerventilkolben 66 den Steuerventilkolbensitz 58 freigegeben hat. Über den Druck der getrockneten Druckluft B baut sich im Ventilkolbenraum 60 ausreichend Druck auf, um den Ventilkolben 62 auf seinen Ventilkolbensitz 54 zu drücken, wodurch der erste Teilabschnitt 52 verschlossen wird, Spülluft C kann nicht mehr durch den Spülluftkanal 50 strömen.

Erkennbar ist weiterhin, dass nur Schleichluft D durch den Schleichluftkanal 72 aus dem Ventilkolbenraum 60 in den Spülluftkanal 50 strömen kann.

Der Ventilkolben 62 kann durch eine nicht dargestellte Feder in seiner Bewegung unterstützt werden.

Bei dieser Ausführungsvariante ist der Spülluftkanal 50 also im nicht bestromten Zustand der Magnetspule 68 geöffnet, so das Spülluft C insbesondere auch bei einem Stromausfall oder einer Störung strömen kann.

Im gezeigten Ausführungsbeispiel befindet sich der Taupunktsensor 36 im Spülluftkanal 50. Alternativ kann er auch im Auslasskanal 48 angeordnet sein.

Als Taupunktsensor 36 können beispielsweise kapazitive Sensoren oder auch Spiegel-Taupunktsensoren eingesetzt werden.

Die Erfindung ist nicht auf die gezeigten Ausführungsbeispiele beschränkt, sondern umfasst auch weitere Varianten, die auf Basis der erläuterten Erfindung und innerhalb der Schutzbereiche der unabhängigen Patentansprüche 1 und 12 realisierbar sind.

## Patentansprüche

1. Spülluftregeleinheit (20) für eine Trocknungsvorrichtung für Druckluft (A), die mit einem Gehäuse (46), in dem ein Bündel Hohlfasermembrane (28), angeordnet ist, derart verbindbar ist, dass ein Teilstrom von aus einem Auslasskanal (48) aus dem Gehäuse (46) ausströmender getrockneter Druckluft (B) durch die Spülluftregeleinheit (20) als Spülluft (C) zurück zu den Hohlfasermembranen (28) leitbar ist,
wobei die Spülluftregeleinheit (20) aufweist
- eine Regeleinheit (35) mit einem Temperatursensor zur Erfassung der Temperatur der getrockneten Druckluft (B) und
- ein von der Regeleinheit (35) geregeltes Stellventil (38), das einen Spülluftkanal (50) zum Leiten der Spülluft (C) zumindest teilweise öffnet oder schließt,
**dadurch gekennzeichnet, dass** die Regeleinheit (35) zur Berechnung eines Drucktaupunktes der getrockneten Druckluft (B) eingerichtet ist und einen Taupunktsensor (36) zur Erfassung des Taupunktes der getrockneten Druckluft (B) aufweist und dass das Stellventil den Spülluftkanal (50) zum Leiten der Spülluft (C) in Abhängigkeit vom Drucktaupunkt der getrockneten Druckluft (B) zumindest teilweise öffnet oder schließt.

2. Spülluftregeleinheit (20) nach Anspruch 1, **dadurch gekennzeichnet, dass** der Taupunktsensor (36) im Spülluftkanal (50) angeordnet ist.

3. Spülluftregeleinheit (20) nach Anspruch 1, **dadurch gekennzeichnet, dass** der Taupunktsensor (36) im Auslasskanal (48) des Gehäuses (48) angeordnet ist.

4. Spülluftregeleinheit (20) nach einem der Ansprüche 1 bis 3, **dadurch gekennzeichnet, dass** ein Schleichluftkanal (72) vorgesehen ist, durch den permanent, auch bei geschlossenem Stellventil (38), getrocknete Druckluft (B) als Schleichluft (D) zurück in das Gehäuse (46) strömt.

5. Spülluftregeleinheit (20) nach Anspruch 4, **dadurch gekennzeichnet, dass** der Schleichluftkanal (72) in Strömungsrichtung hinter dem Taupunktsensor (36) abzweigt.

6. Spülluftregeleinheit (20) nach einem der Ansprüche 1 bis 5, **dadurch gekennzeichnet, dass** das Stellventil (38) motorisch bewegbar ist.

7. Spülluftregeleinheit (20) nach einem der Ansprüche 1 bis 6, **dadurch gekennzeichnet, dass** das Stellventil (38) als Magnetventil ausgeführt ist.

8. Spülluftregeleinheit (20) nach einem der Ansprüche 1 bis 7, **dadurch gekennzeichnet, dass** das Stellventil (38) einen Ventilkolben (62), der den Spülluftkanal (50) verschließen und freigeben kann und einen Steuerventilkolben (66), der einen Verbindungskanal (70) verschließen und freigeben kann, aufweist.

9. Spülluftregeleinheit (20) nach Anspruch 8, **dadurch gekennzeichnet, dass** dann, wenn der Steuerventilkolben (66) den Verbindungskanal (70) verschließt, der Ventilkolben (62) den Spülluftkanal (50) freigibt.

10. Spülluftregeleinheit (20) nach Anspruch 8 oder 9, **dadurch gekennzeichnet, dass** der Ventilkolben (62) derart angeordnet ist, dass die Spülluft (C) den Ventilkolben (62) in eine geöffnete Position drückt, wenn der Steuerventilkolben (66) den Steuerkanal verschließt.

11. Spülluftregeleinheit (20) nach einem der Ansprüche 8 bis 10, **dadurch gekennzeichnet, dass** der Steuerventilkolben (66) über eine Bestromung einer Magnetspule (68) bewegt wird.

12. Verfahren zur Regelung der Strömung von aus einem Membrantrockner (22) ausströmender getrockneter Druckluft (B) zurück in ein Gehäuse (46) des Membrantrockners (22), in dem ein Membranfilter, vorzugsweise ein Bündel Hohlfasermembranen (28), angeordnet ist, mit Hilfe einer Spülluftregeleinheit (20) nach einem der Ansprüche 1 bis 11, mit den Verfahrensschritten
- Ermitteln eines Drucktaupunktes der ausströmenden getrockneten Druckluft (B),
- Öffnen oder Schließen eines in einem Spülluftkanal (50) angeordneten Stellventils (38) in Abhängigkeit des ermittelten Drucktaupunktes, wobei durch den Spülluftkanal (50) getrocknete Druckluft (B) als Spülluft (C) zurück zu den Hohlfasermembranen (28) leitbar ist.

13. Verfahren nach Anspruch 12, **gekennzeichnet durch** Vergleichen des ermittelten Drucktaupunkts mit einem Sollwert wobei bei einer Abweichung vom Sollwert das Stellventil (38) zyklisch bis Erreichen des Sollwertes geöffnet und geschlossen wird.

14. Verfahren nach Anspruch 13, **gekennzeichnet durch** dauerhaftes Öffnen des Stellventils (38), wenn der Sollwert nach einer vorgegebenen Zeitvorgabe durch zyklisches Öffnen des Stellventils (38) nicht erreicht wird.

## Claims

1. A purge air regulating unit (20) for a drying device for compressed air (A), wherein said purge air regulating unit can be connected to a housing (46), in which a bundle of hollow fiber membranes (28) is arranged, in such a way that a sub-flow of dried compressed air (B) flowing out of the housing (46) through an outlet channel (48) can be conducted back to the hollow fiber membranes (28) in the form of purge air (C) by the purge air regulating unit (20),
wherein the purge air regulating unit (20) comprises
- a regulating unit (35) with a temperature sensor for detecting the temperature of the dried compressed air (B), and
- a control valve (38) that is regulated by the regulating unit (35) and at least partly opens or closes a purge air channel (50) for conducting the purge air (C),
**characterized in that** the regulating unit (35) is designed for calculating a pressure dew point of the dried compressed air (B) and has a dew point sensor (36) for detecting the dew point of the dried compressed air (B), and **in that** the control valve at least partly opens or closes the purge air channel (50) for conducting the purge air (C) in dependence on the pressure dew point of the dried compressed air (B).

2. The purge air regulating unit (20) according to claim 1, **characterized in that** the dew point sensor (36) is arranged in the purge air channel (50).

3. The purge air regulating unit (20) according to claim 1, **characterized in that** the dew point sensor (36) is arranged in the outlet channel (48) of the housing (48).

4. The purge air regulating unit (20) according to one of claims 1 to 3, **characterized in that** a creep air channel (72) is provided, through which dried compressed air (B) permanently flows back into the housing (46) in the form of creep air (D), namely also when the control valve (38) is closed.

5. The purge air regulating unit (20) according to claim 4, **characterized in that** the creep air channel (72) branches off downstream of the dew point sensor (36) referred to the flow direction.

6. The purge air regulating unit (20) according to one of claims 1 to 5, **characterized in that** the control valve (38) can be moved in a motor-driven manner.

7. The purge air regulating unit (20) according to one of claims 1 to 6, **characterized in that** the control valve (38) is realized in the form of a solenoid valve.

8. The purge air regulating unit (20) according to one of claims 1 to 7, **characterized in that** the control valve (38) comprises a valve piston (62), which can close and release the purge air channel (50), and a control valve piston (66), which can close and release a connecting channel (70).

9. The purge air regulating unit (20) according to claim 8, **characterized in that** the valve piston (62) releases the purge air channel (50) when the control valve piston (66) closes the connecting channel (70).

10. The purge air regulating unit (20) according to claim 8 or 9, **characterized in that** the valve piston (62) is arranged in such a way that the purge air (C) presses the valve piston (62) into an open position when the control valve piston (66) closes the control channel.

11. The purge air regulating unit (20) according to one of claims 8 to 10, **characterized in that** the control valve piston (66) is moved by feeding a current to a magnet coil (68).

12. A method for regulating the flow of dried compressed air (B), which flows out of a membrane dryer (22), back into a housing (46) of the membrane dryer (22), in which a membrane filter, preferably a bundle of hollow fiber membranes (28), is arranged, with the aid of a purge air regulating unit (20) according to one of claims 1 to 11, wherein said method comprises the steps of
- determining a pressure dew point of the outflowing dried compressed air (B), and
- opening or closing a control valve (38) arranged in a purge air channel (50) in dependence on the determined pressure dew point, wherein dried compressed air (B) can be conducted back to the hollow fiber membranes (28) in the form of purge air (C) through the purge air channel (50).

13. The method according to claim 12, **characterized by** comparing the determined pressure dew point with a nominal value, wherein the control valve (38) is upon a deviation from the nominal value cyclically opened and closed until the nominal value is reached.

14. The method according to claim 13, **characterized by** permanently opening the control valve (38) if the nominal value is not reached by cyclically opening the control valve (38) after a predefined time limit.

## Revendications

1. Unité de réglage d'air de balayage (20) pour un dispositif de séchage pour air comprimé (A) qui peut être reliée de telle façon à un boîtier (46) dans lequel un faisceau de membranes de fibres creuses (28) est disposé, qu'un courant partiel d'air comprimé (B) séché s'écoulant hors du boîtier (46) à partir d'un canal d'évacuation (48) peut être reconduit vers les membranes de fibres creuses (28) par l'unité de réglage d'air de balayage (20) en tant qu'air de balayage (C),
dans lequel l'unité de réglage d'air de balayage (20) présente
- une unité de régulation (35) comprenant un capteur de température pour détecter la température de l'air comprimé (B) séché et
- un clapet de réglage (38) réglé par l'unité de réglage (35) qui ferme ou ouvre au moins partiellement un canal d'air de balayage (50) pour diriger l'air de balayage (C),
**caractérisée en ce que** l'unité de réglage (35) est équipée pour calculer un point de condensation de pression de l'air comprimé (B) séché et un capteur de point de condensation (36) pour détecter le point de condensation de l'air comprimé (B) séché, et que le clapet de réglage ferme ou ouvre au moins partiellement le canal d'air de balayage (50) pour diriger l'air de balayage (C) en fonction du point de condensation de pression de l'air comprimé (B) séché.

2. Unité de réglage d'air de balayage (20) selon la revendication 1, **caractérisée en ce que** le capteur de point de condensation (36) est disposé dans le canal d'air de balayage (50).

3. Unité de réglage d'air de balayage (20) selon la revendication 1, **caractérisée en ce que** le capteur de point de condensation (36) est disposé dans le canal d'évacuation (48) du boîtier (46).

4. Unité de réglage d'air de balayage (20) selon l'une des revendications 1 à 3, **caractérisée en ce qu'**un canal d'air vagabond (72) est prévu à travers lequel l'air comprimé (B) séché retourne en permanence dans le boîtier (46) en tant qu'air vagabond (D), même lorsque le clapet de réglage (38) est fermé.

5. Unité de réglage d'air de balayage (20) selon la revendication 4, **caractérisée en ce que** le canal d'air vagabond (72) bifurque derrière le capteur de point de condensation (36) dans le sens d'écoulement.

6. Unité de réglage d'air de balayage (20) selon l'une des revendications 1 à 5, **caractérisée en ce que** le clapet de réglage (38) est mobile par moteur.

7. Unité de réglage d'air de balayage (20) selon l'une des revendications 1 à 6, **caractérisée en ce que** le clapet de réglage (38) est conçu en tant qu'électrovanne.

8. Unité de réglage d'air de balayage (20) selon l'une des revendications 1 à 7, **caractérisée en ce que** le clapet de réglage (38) présente un piston de clapet (62) qui peut fermer et libérer le canal d'air de balayage (50), et un piston de clapet de commande (66) qui peut fermer et libérer un canal de liaison (70).

9. Unité de réglage d'air de balayage (20) selon la revendication 8, **caractérisée en ce que** lorsque le piston de clapet de commande (66) ferme le canal de liaison (70), le piston de clapet (62) libère le canal d'air de balayage (50).

10. Unité de réglage d'air de balayage (20) selon la revendication 8 ou 9, **caractérisée en ce que** le piston de clapet (62) est ainsi disposé que l'air de balayage (C) appuie le piston de clapet (62) dans une position ouverte lorsque le piston de clapet de commande (66) ferme le canal de commande.

11. Unité de réglage d'air de balayage (20) selon l'une des revendications 8 à 10, **caractérisée en ce que** le piston de clapet de commande (66) est déplacé par une alimentation électrique d'une bobine d'électro-aimant (68).

12. Procédé de régulation de l'écoulement d'un air comprimé (B) séché renvoyé d'un sécheur à membrane (22) vers un boîtier (46) du sécheur à membrane (22) dans lequel est disposé un filtre à membrane, de préférence un faisceau de membranes à fibres creuses (28), à l'aide d'une unité de réglage d'air de balayage (20) selon l'une des revendications 1 à 11, comprenant les étapes de procédé de
- détermination d'un point de condensation de l'air comprimé (B) séché sortant,
- ouverture et fermeture d'un clapet de réglage (38) disposé dans le canal d'air de balayage (50) en fonction du point de condensation de pression déterminé, dans lequel de l'air comprimé (B) séché par le canal d'air de balayage (50) peut être reconduit vers les membranes de fibres creuses (28) en tant qu'air de balayage (C).

13. Procédé selon la revendication 12, **caractérisé par** la comparaison du point de condensation de pression déterminé à une valeur de consigne, dans lequel en cas d'écart par rapport à la valeur de consigne, le clapet de réglage (38) est ouvert et fermé de manière cyclique jusqu'à l'obtention de la valeur de consigne.

14. Procédé selon la revendication 13, **caractérisé par** l'ouverture permanente du clapet de réglage (38) lorsque la valeur de consigne n'est pas atteinte par ouverture cyclique du clapet de réglage (38) après une durée fixée.
